# EUROPEAN PATENT APPLICATION

(11) **EP 4 299 161 A1**
(43) Date of publication of application: **03.01.2024**
(21) Application number: 22759468.6
(22) Date of filing: 17.02.2022
(51) Int. Cl.: B01D 53/14, B01J 20/02, B01J 20/28, A23L 3/358

(54) **OXYGEN SCAVENGER POWDER**

(30) Priority: 25.02.2021 JP 2021028794
(71) Applicant: MITSUBISHI GAS CHEMICAL COMPANY, INC., Chiyoda-ku Tokyo 100-8324 (JP)
(72) Inventor: OKA, Naoki, Tokyo 125-8601 (JP); ITOH, Takayoshi, Tokyo 125-8601 (JP)
(74) Representative: Hoffmann Eitle
(86) International application number: PCT/JP2022/006286
(87) International publication number: WO 2022/181429

(57) **Abstract**

Provided is an oxygen scavenger powder containing an iron powder, a metal halide, and an alkaline agent, in which the alkaline agent has a solubility of less than 0.1 g in 100 g of water at 25°C, and an aqueous dispersion of the alkaline agent has a pH of from 8 to 12 at 25°C.

## Description

### Technical Field

The present invention relates to an oxygen scavenger powder.

### Background Art

A method of using an oxygen scavenger is known as a storage technique for food products, pharmaceutical products, and the like. In this method, a stored object and an oxygen scavenger are enclosed and sealed in a sealed container having gas-barrier properties, thereby allowing the oxygen scavenger to absorb oxygen inside the sealed container. Thus, an atmosphere in the sealed container can be kept substantially in an oxygen-free state. As a function, the oxygen scavenger is preferably small in size and able to absorb large amounts of oxygen. In other words, an oxygen scavenger composition with a large amount of oxygen absorption per unit volume is preferred.

Exemplary oxygen scavengers include: iron-based oxygen scavengers that include iron (iron powder) as their main agent; and non-iron-based oxygen scavengers that include ascorbic acid, glycerin, and the like as their main agents. The oxygen scavenger is appropriately selected according to the intended use, but an iron-based oxygen scavenger is widely used from the perspective of oxygen absorption performance.

An iron-based oxygen scavenger includes a moisture-dependent oxygen scavenger that is substantially free of moisture. Since the moisture-dependent oxygen scavenger retains its deoxidation performance only after being placed under a high humidity environment, a long working time for loading into and sealing in a product can be ensured, thereby having high workability. As the moisture-dependent oxygen scavenger, for example, Patent Document 1 discloses an oxygen scavenger composition containing an iron powder, a metal bromide and/or a metal iodide, and a thiosulfate for the purpose of improving economic efficiency and oxygen absorbability and suppressing rusting under high humidity.

### Citation List

### Patent Document

Patent Document 1: WO 2012/169616

### Summary of Invention

### Technical Problem

When a product having its container enclosing a stored object and an oxygen scavenger is opened, the oxygen scavenger may react with oxygen in the atmosphere and generate heat. In particular, many of the moisture-dependent oxygen scavengers contain an iron powder as the main content, and this can lead to a high exothermic temperature. In particular, in the case where a packaging material for the oxygen scavenger is an oxygen scavenger in which one surface is formed of a non-air-permeable laminated film and the other surface is formed of a polyethylene nonwoven fabric as described in the method for preparing an oxygen scavenger package of Patent Document 1, the exothermic temperature is particularly likely to be high because of a high air permeability and a low heat insulating property of the packaging material. Therefore, an oxygen scavenger capable of suppressing heat generation has been required.

However, the heat generation of the oxygen scavenger is caused by a reaction with oxygen, and the suppression of the heat generation greatly impairs oxygen absorption performance, which is a required basic function of the oxygen scavenger, and thus it has been difficult to achieve both the oxygen absorption performance and the suppression of the heat generation.

Accordingly, an issue to be solved by the present invention is to provide an oxygen scavenger powder which is excellent in oxygen absorption performance and can suppress heat generation at the time of product opening.

### Solution to Problem

As a result of intensive studies to solve the above-described issue, the present inventors have found that, when a specific additive is added to an iron powder, it is possible to obtain an oxygen scavenger that generates less heat when a product in which the oxygen scavenger is enclosed is opened, and that is simultaneously excellent in oxygen absorption performance.

The present invention relates to the following aspects <1> to <11>.
<1> An oxygen scavenger powder containing an iron powder, a metal halide, and an alkaline agent, in which the alkaline agent has a solubility of less than 0.1 g in 100 g of water at 25°C, and an aqueous dispersion of the alkaline agent has a pH of from 8 to 12 at 25°C.
<2> The oxygen scavenger powder according to <1>, further containing activated carbon.
<3> The oxygen scavenger powder according to <1> or <2>, in which a content of the alkaline agent is from 0.1 to 20 parts by mass with respect to 100 parts by mass of the iron powder.
<4> The oxygen scavenger powder according to <2> or <3>, in which a content of the activated carbon is from 0.01 to 5 parts by mass with respect to 100 parts by mass of the iron powder.
<5> The oxygen scavenger powder according to any one of <1> to <4>, in which the aqueous dispersion of the alkaline agent has a pH of from 9.5 to 11.5 at 25°C.
<6> The oxygen scavenger powder according to any one of <1> to <5>, in which the alkaline agent is at least one selected from the group consisting of magnesium oxide, magnesium hydroxide, basic magnesium carbonate, barium sulfate, and trimagnesium phosphate.
<7> The oxygen scavenger powder according to <6>, in which the magnesium oxide is at least one selected from the group consisting of heavy burned magnesium oxide and electrofused magnesium oxide.
<8> The oxygen scavenger powder according to any one of <1> to <7>, in which the metal halide is at least one selected from the group consisting of an alkali metal chloride, an alkali metal bromide, an alkaline earth metal chloride, and an alkaline earth metal bromide.
<9> The oxygen scavenger powder according to any one of <1> to <8>, in which a content of the metal halide is from 0.01 to 5 parts by mass with respect to 100 parts by mass of the iron powder.
<10> The oxygen scavenger powder according to any one of <1> to <9>, in which the alkaline agent is a particle, and an average particle diameter of the particle is from 3 to 50 µm.
<11> An oxygen scavenger package including the oxygen scavenger powder described in any one of <1> to <10> and an air-permeable packaging material containing the oxygen scavenger powder.

### Advantageous Effects of Invention

The present invention provides an oxygen scavenger powder and an oxygen scavenger package that cause the oxygen scavenger to generate less heat when a container enclosing its stored object and the oxygen scavenger is opened, and that are excellent in oxygen absorption performance.

### Description of Embodiments

An embodiment according to the present invention will be described below. The content of the present invention is not limited to the embodiment described below.

Note that in the present specification, a phrase of "A to B" indicating a numerical range means "greater than or equal to A and less than or equal to B" (in the case of A < B), or "less than or equal to A and greater than or equal to B" (in the case of A > B). Furthermore, in the present invention, a combination of preferable aspects is a more preferable aspect.

### Oxygen scavenger powder

The oxygen scavenger powder according to the present invention contains an iron powder, a metal halide, and an alkaline agent, and the alkaline agent has a solubility of less than 0.1 g in 100 g of water at 25°C, and an aqueous dispersion of the alkaline agent has a pH of from 8 to 12 at 25°C.

In addition, the oxygen scavenger powder of the present invention has effects of suppressing heat generation when a container enclosing the oxygen scavenger powder is opened and has excellent oxygen absorption performance. Such an oxygen scavenger powder according to the present invention can be applied to an oxygen scavenger containing iron as its main agent, and is particularly suitable for a moisture-dependent oxygen scavenger.

### Iron Powder

The iron powder contained in the oxygen scavenger powder according to the present invention is not particularly limited as long as the iron surface is exposed, and a reduced iron powder, an electrolytic iron powder, an atomized iron powder, or the like can be suitably used. Furthermore, a pulverized product or a cutting chip of cast iron or the like can also be used.

The iron powder can be used singly in one kind, or as required, in combination of two or more kinds. Furthermore, as these iron powders, commercially available products can also be easily obtained.

The iron powder has an average particle diameter of preferably 1000 µm or less, more preferably 500 µm or less, even more preferably 200 µm or less, and still even more preferably 100 µm or less from the perspective of improving contact with oxygen, and preferably 1 µm or greater, more preferably 10 µm or greater, and even more preferably 20 µm or greater from the perspective of suppressing generation of dust.

The average particle diameter of the iron powder is a D50 median diameter. Specific measurement methods include those methods described in Examples.

Furthermore, from the perspective of the oxygen absorption capacity, a specific surface area of the iron powder is preferably 0.01 m²/g or greater and more preferably 0.03 m²/g or greater. The specific surface area of the iron powder can be determined by the BET multipoint method.

The oxygen scavenger powder of the present invention contains an iron powder as its main agent. A content of the iron powder in the oxygen scavenger powder is preferably 40 mass% or greater and 99 mass% or less, more preferably 80 mass% or greater and 98 mass% or less, and even more preferably 90 mass% or greater and 97 mass% or less in the oxygen scavenger powder.

### Metal Halide

The metal halide contained in the oxygen scavenger powder of the present invention is a substance that catalytically acts on an oxidation reaction of iron to improve the iron activity. The metal halide also plays a role of retaining moisture absorbed by or in contact with the oxygen scavenger powder in the oxygen scavenger powder.

Any commonly known metal halide can be used as the metal halide without particular limitation.

The metal in the metal halide is not particularly limited, and examples thereof include at least one selected from the group consisting of alkali metals, alkaline earth metals, copper, zinc, aluminum, tin, iron, cobalt, and nickel. Among these, at least one selected from the group consisting of lithium, potassium, sodium, magnesium, calcium, barium, and iron is more preferable. The halide in the metal halide is not particularly limited, and examples thereof include chloride, bromide, and iodide.

Among these, the metal halide is preferably at least one selected from the group consisting of an alkali metal chloride, an alkali metal bromide, an alkaline earth metal chloride, and an alkaline earth metal bromide.

The metal halide is preferably at least one selected from the group consisting of calcium chloride, sodium chloride, calcium bromide, sodium bromide, calcium iodide, and sodium iodide. From the perspectives of handleability, safety, and the like, the metal halide is more preferably at least one selected from the group consisting of calcium chloride, sodium chloride, calcium bromide, and sodium bromide, and even more preferably at least one selected from the group consisting of calcium chloride and sodium chloride.

The metal halides can be used singly in one kind, or as required, in combination of two or more kinds. For these metal halides, commercially available products can also be used.

A content of the metal halide in the oxygen scavenger powder is not particularly limited, but is preferably 0.005 mass% or greater and 5 mass% or less, more preferably 0.025 mass% or greater and 2 mass% or less, even more preferably 0.05 mass% or greater and 1 mass% or less, and still even more preferably 0.1 mass% or greater and 1 mass% or less in the oxygen scavenger powder. Furthermore, the content is preferably from 0.01 to 5 parts by mass, more preferably from 0.05 to 2 parts by mass, and even more preferably from 0.1 to 1 part(s) by mass with respect to 100 parts by mass of the iron powder.

### Alkaline Agent

The oxygen scavenger powder of the present invention contains an alkaline agent.

It is considered that the alkaline agent contained in the oxygen scavenger powder of the present invention contributes to suppression of heat generation of the oxygen scavenger particularly when a container enclosing the oxygen scavenger powder is opened.

The alkaline agent exhibits alkalinity in the form of an aqueous dispersion, and a pH of the aqueous dispersion of the alkaline agent at 25°C is from 8 to 12, preferably from 9 to 12, more preferably from 9.5 to 11.5, and even more preferably from 10.0 to 11.5.

The pH of the aqueous dispersion of the alkaline agent is a pH of a supernatant liquid when the alkaline agent has a concentration of equal to or higher than a saturation solubility at 25°C, and is specifically measured by the method described in Examples.

Also, the alkaline agent has a solubility of less than 0.1 g in 100 g of water at 25°C.

The reason why the effects of the present invention are exerted by using, as the alkaline agent, an alkaline agent having a solubility of less than 0.1 g in 100 g of water at 25°C (hereinafter, sometimes referred to as hardly water-soluble alkaline agent) is presumed as follows.

It is generally known that an oxidation rate of the iron powder is affected by pH, and the oxidation rate of iron decreases in a high pH region. The oxygen scavenger powder of the present invention contains an iron powder and a hardly water-soluble alkaline agent, and thus, when the oxygen scavenger is sealed in a packaging container together with the stored object, oxidation by the iron powder proceeds at the start of use, and oxygen in the packaging container can be quickly absorbed to bring about a deoxidized state. Thereafter, the hardly water-soluble alkaline agent reacts with moisture in the packaging container over time and is gradually dissolved in water, thereby changing the surface of the iron powder to a high pH state and reducing the oxidation activity of iron. As a result, it is presumed that, since the oxidation rate of the iron powder is decreased when the packaging container is opened to take out the stored object, the heat generation of the oxygen scavenger at the time of opening can be suppressed.

The alkaline agent can be used singly in one kind, or as required in, in combination of two or more kinds. For these alkaline agents, commercially available products can also be used.

The alkaline agent has a solubility of less than 0.1 g, preferably less than 0.01 g in 100 g of water at 25°C. The lower limit value is not limited, but is preferably 0.1 mg or greater.

The solubilities of the alkaline agents in 100 g of water at 25°C are values specific to the substances, and the values described in (M)SDS of the respective substances may be referred to. When there is no value described in (M)SDS, they can be measured by the temperature change method (2) or an evaporation method.

The alkaline agent is not limited, but is preferably at least one selected from the group consisting of magnesium oxide, magnesium hydroxide, basic magnesium carbonate, barium sulfate, and trimagnesium phosphate, more preferably at least one selected from the group consisting of magnesium oxide, magnesium hydroxide, and basic magnesium carbonate, even more preferably at least one selected from the group consisting of magnesium oxide and magnesium hydroxide, and still even more preferably magnesium oxide.

The alkaline agent can be used singly in one kind, or as required, in combination of two or more kinds. For these alkaline agents, commercially available products can also be used.

The magnesium oxide is preferably at least one selected from the group consisting of heavy burned magnesium oxide and electrofused magnesium oxide. The heavy burned magnesium oxide is magnesium oxide burned at a high temperature. The electrofused magnesium oxide is particularly preferred. The reason for this is that, as compared with other alkaline agents, it less adversely affects the deoxidation time, and causes quick deoxidation. In addition, since the electrofused magnesium oxide has a bulk density larger than that of general magnesium oxide, the electrofused magnesium oxide is heavier than general magnesium oxide, has good miscibility with the iron powder, and has less powder scattering, and thus is excellent also in terms of handleability.

The alkaline agent contained in the oxygen scavenger powder of the present invention is preferably a particle, and an average particle diameter of the alkaline agent particle contained in the oxygen scavenger powder of the present invention is preferably from 0.1 to 100 µm, more preferably from 0.5 to 70 µηι, and even more preferably from 3 to 50 µm.

The average particle diameter of the alkaline agent particles is a D50 median diameter. Specific measurement methods include the methods described in Examples.

A content of the alkaline agent in the oxygen scavenger powder is not particularly limited, but is preferably 0.05 mass% or greater and 20 mass% or less, more preferably 0.25 mass% or greater and 10 mass% or less, even more preferably 0.5 mass% or greater and 8 mass% or less, and still even more preferably 2.5 mass% or greater and 8 mass% or less in the oxygen scavenger powder. Furthermore, the content is preferably from 0.1 to 20 parts by mass, more preferably from 0.5 to 15 parts by mass, and even more preferably from 1.0 to 10 part(s) by mass with respect to 100 parts by mass of the iron powder. When the content of the alkaline agent falls within the range described above, heat generation at the time of product opening can be efficiently suppressed while the oxygen absorption performance of the iron powder is maintained.

### Activated Carbon

The oxygen scavenger powder of the present invention preferably further contains activated carbon depending on the required performance.

Activated carbon has a water-retaining function, and also has functions of promoting an oxidation reaction of the iron powder and adsorbing odor, and thus is preferably incorporated in generally assumed applications. The type of activated carbon is not particularly limited, and may be any of wood-based, coconut shell, coal, and the like.

A form of the activated carbon is not particularly limited, but a powder having a high fluidity is suitably used from the perspective of handleability during production of the oxygen scavenger. Furthermore, the activated carbon has an average particle diameter of preferably 1 µm or greater and 1000 µm or less, more preferably 3 µm or greater and 200 µm or less, and even more preferably 10 µm or greater and 60 µm or less from the perspective of handleability during production of the oxygen scavenger powder. Any particles of the activated carbon can be used regardless of whether they are primary particles, agglomerated particles or granules, as long as the particles have a particle size in the range described above. The activated carbon having a particle size in the range described above can be used singly in one kind, or several kinds thereof having different particle sizes can be mixed in any ratio.

The average particle diameter of the activated carbon is a D50 median diameter. Specific measurement methods include the methods described in Examples.

A content of the activated carbon in the oxygen scavenger powder is not particularly limited, but is preferably 0.005 mass% or greater and 5 mass% or less, more preferably 0.025 mass% or greater and 2 mass% or less, even more preferably 0.05 mass% or greater and 1 mass% or less, and still even more preferably 0.25 mass% or greater and 1 mass% or less in the oxygen scavenger powder. Furthermore, the content is preferably from 0.01 to 5 parts by mass, more preferably from 0.05 to 2 parts by mass, and even more preferably from 0.1 to 1 part(s) by mass with respect to 100 parts by mass of the iron powder. When the content of the activated carbon falls within the range described above, the oxygen scavenger powder can hold water, promote the oxidation reaction, and increase the amount of oxygen absorption.

### Additive

The oxygen scavenger powder of the present invention may contain, in addition to the above-described components, known additives as required within a range where the effects of the present invention are not impaired. Examples of the additive include silica, alumina, and gypsum. The additive can be used singly in one kind, or as required, in combination of two or more kinds.

### Characteristics and production method of oxygen scavenger powder

The oxygen scavenger powder of the present invention contains an iron powder, a metal halide, and a hardly water-soluble alkaline agent.

The oxygen scavenger powder of the present invention has an average particle diameter of preferably from 10 to 200 µm, and more preferably from 50 to 150 µm.

Since the average particle diameter of the oxygen scavenger powder falls within the range described above, heat generation of the oxygen scavenger when a container enclosing the oxygen scavenger is opened can be suppressed while a high oxygen absorption performance is maintained.

The oxygen scavenger powder of the present invention is suitably used as a moisture-dependent oxygen scavenger, and is preferably substantially free of moisture. A moisture content of the oxygen scavenger powder of the present invention is preferably 10 mass% or less, more preferably 5 mass% or less, even more preferably 1 mass% or less, and still even more preferably 0.5 mass% or less.

The method for producing an oxygen scavenger powder according to the present invention is not particularly limited as long as it is a method by which the above-described oxygen scavenger powder can be obtained, but the following methods are exemplified as preferred methods.

(Method 1) A method in which an iron powder and an aqueous solution of a metal halide are mixed, the resulting mixture is dried, and then a powdery hardly water-soluble alkaline agent is mixed in; and (Method 2) a method in which an iron powder, a powdery hardly water-soluble alkaline agent, and an aqueous solution of a metal halide are mixed, and the resulting mixture is dried.

When activated carbon is used, examples of Method 1 include: (Method 1-1) a method in which an iron powder, activated carbon and an aqueous solution of a metal halide are mixed, the resulting mixture is dried, and then a powdery hardly water-soluble alkaline agent is mixed in; and (Method 1-2) a method in which an iron powder and an aqueous solution of a metal halide are mixed, the resulting mixture is dried, and then activated carbon and a powdery hardly water-soluble alkaline agent are mixed in. Examples of Method 2 include: (Method 2-1) a method in which an iron powder, a powdery hardly water-soluble alkaline agent, activated carbon and an aqueous solution of a metal halide are mixed, and the resulting mixture is dried; and (Method 2-2) a method in which an iron powder, a powdery hardly water-soluble alkaline agent, and an aqueous solution of a metal halide are mixed, the resulting mixture is dried, and then activated carbon is mixed in.

Methods 1 and 2 are preferable because the load of drying is small during production, and Method 1 is more preferable because the alkaline agent can be dotted on the surface of the iron powder and thus heat generation can be efficiently suppressed.

An apparatus used for mixing is not particularly limited, and for example, a ribbon blender can be used.

### Oxygen Scavenger Package

The oxygen scavenger package of the present invention includes the oxygen scavenger powder described above and an air-permeable packaging material containing the oxygen scavenger powder.

### Packaging Material

Examples of the packaging material include a packaging material having a bag shape formed by bonding two sheets of an air-permeable packaging material to each other, a packaging material having a bag shape formed by bonding one sheet of an air-permeable packaging material and one sheet of a non-air-permeable packaging material to each other, and a packaging material having a bag shape formed by folding one sheet of an air-permeable packaging material and sealing edges other than the folded portion.

Here, when the air-permeable packaging material and the non-air-permeable packaging material each have a quadrilateral shape, examples of the packaging material include a packaging material having a bag shape formed by overlapping two sheets of an air-permeable packaging material and heat-sealing their four sides, a packaging material having a bag shape formed by overlapping one sheet of an air-permeable packaging material and one sheet of a non-air-permeable packaging material and heat-sealing their four sides, and a packaging material having a bag shape formed by folding one sheet of an air-permeable packaging material and heat-sealing its three sides other than the folded portion. Furthermore, the packaging material may be a packaging material having a bag shape formed by forming an air-permeable packaging material into a tubular shape and heat-sealing both ends and a trunk portion of the resulting tubular body.

### Air-permeable Packaging Material

For the air-permeable packaging material, a packaging material through which oxygen permeates may be selected. Especially, a packaging material having an air permeation resistance of 600 seconds or less, more preferably 100 seconds or less as measured by a Gurley tester method is suitably used, but the air-permeable packaging material is not limited thereto, and may be a packaging material having a higher air permeation resistance depending on the performance of a desired product. Here, the air permeation resistance refers to a value as measured by the method in accordance with JIS P8117 (1998). More specifically, it refers to a time period necessary for 100 mL of air to permeate an air-permeable packaging material as measured using a Gurley densometer (available from TOSEI CO., LTD.).

As the air-permeable packaging material, in addition to paper and nonwoven fabric, a plastic film, to which air permeability is imparted, is used. Examples of such a plastic film include a laminate film obtained by laminating and bonding a film of polyethylene terephthalate, polyamide, polypropylene, polycarbonate, or the like, and a film of polyethylene, an ionomer, polybutadiene, ethylene acrylic acid copolymer, ethylene methacrylate copolymer, ethylene vinyl acetate copolymer, or the like as a sealing layer. These laminates can also be used as the air-permeable packaging material.

As the method of imparting air permeability, various methods can be employed, in addition to punching with a cold needle or a heat needle. When air permeability is imparted by punching, the air permeability can be freely adjusted by a diameter, the number, a material, and the like of holes to be punched.

The thickness of the laminated film is preferably 50 to 300 µm, and particularly preferably 60 to 250 µm. In this case, as compared to a case where the thickness deviates from the range described above, the packaging material can be a packaging material that retains strength and has an excellent heat sealing property and packaging suitability.

### Examples

Hereinafter, the present embodiment will be described in detail using Examples and Comparative Examples, but the present embodiment can be modified as appropriate as long as the present embodiment achieves the effects of the present invention.

### Production of Oxygen Scavenger Powder and Oxygen Scavenger Package

### Example 1

To 100 g of an iron powder (atomized iron powder, average particle diameter: 80 µm), 3 g of a 10 mass% calcium chloride aqueous solution and 0.5 g of activated carbon (wood, average particle diameter: 30 µm) were added, and they were mixed at 25°C until moisture was dried to obtain a main agent of an oxygen scavenger powder.

To 4.0 g of the main agent, 0.2 g of magnesium oxide (available from Tomita Pharmaceutical Co., Ltd., heavy food additive, average particle diameter: 30.2 µηι, solubility in 100 g of water at 25°C: 8.6 × 10⁻³ g) was added as a hardly water-soluble alkaline agent, and they were mixed by means of a medicine spoon until uniform to obtain an oxygen scavenger powder.

The oxygen scavenger powder was filled in a packaging bag (50 mm × 50 mm) obtained by overlapping a non-air-permeable laminated film (about 75 µm thick) and an air-permeable laminated film (about 200 µm thick, air permeation resistance: 15 seconds or less) made of a polyolefin nonwoven fabric and heat-sealing each side to attain a bag shape, and an opening was sealed (heat-sealed) to obtain an oxygen scavenger package.

The following evaluations were conducted by using the obtained oxygen scavenger package. The results are shown in Table 1.

### Example 2

An oxygen scavenger powder and an oxygen scavenger package were obtained in the same manner as in Example 1, except that the hardly water-soluble alkaline agent used was electrofused magnesium oxide ("DENMAG" available from Tateho Chemical Industries Co., Ltd., 325 mesh pass, average particle diameter: 20.1 µηι, solubility in 100 g of water at 25°C: 8.6 × 10⁻³ g). The following evaluations were conducted by using the obtained oxygen scavenger package. The results are shown in Table 1.

### Example 3

An oxygen scavenger powder and an oxygen scavenger package were obtained in the same manner as in Example 1, except that the hardly water-soluble alkaline agent used was magnesium hydroxide ("Magnesium Hydroxide SP" available from Naikai Salt Industries Co., Ltd., average particle diameter: 5.3 µηι, solubility in 100 g of water at 25°C: 3.5 × 10⁻⁴ g). The following evaluations were conducted by using the obtained oxygen scavenger package. The results are shown in Table 1.

### Comparative Example 1

No alkaline agent was used, and the main agent of the oxygen scavenger powder of Example 1 was used as an oxygen scavenger powder of Comparative Example 1. An oxygen scavenger package was obtained in the same manner as in Example 1. The following evaluations were conducted by using the obtained oxygen scavenger package. The results are shown in Table 1.

### Comparative Example 2

An oxygen scavenger powder and an oxygen scavenger package were obtained in the same manner as in Example 1, except that the alkaline agent used was calcium hydroxide (special grade calcium hydroxide reagent available from FUJIFILM WAKO PURE CHEMICAL CORPORATION, average particle diameter: 14.4 µηι, solubility in 100 g of water at 25°C: 0.17 g). The following evaluations were conducted by using the obtained oxygen scavenger package. The results are shown in Table 1.

### Solubility of Alkaline Agent in 100 g of Water at 25°C

As the solubility of the alkaline agent in 100 g of water at 25°C, the value described in SDS provided by the manufacturer (supplier of the material) was used. As for the magnesium oxide used in Example 1, the solubility in water is not described in the SDS provided by the manufacturer, and thus the value of the electrofused magnesium oxide of Example 2, which is the same magnesium oxide, was used.

### pH of Aqueous Dispersion of Alkaline Agent

To a 30 mL vial, 5 g of the alkaline agent shown in Table 1 and 10 g of ion-exchanged water were added; the vial was covered with a lid; they were mixed for 10 minutes with an ultrasonic cleaner; and the mixture was allowed to stand for 10 minutes to obtain an aqueous dispersion of the alkaline agent. The pH of a supernatant liquid of the aqueous dispersion was measured with a pH-meter ("LAQUA F-72", electrodes: "9615D-10D", available from HORIBA, Ltd.). The measurement condition was 25°C.

### Average Particle Diameter

The average particle diameter was determined by measuring a D50 median diameter using a digital image analysis particle diameter distribution measuring apparatus ("CAMSIZER XT" available from Microtrac Retsch GmbH).

### Deoxidation Time (oxygen absorption performance evaluation)

In a gas barrier bag, 1000 mL of air, one oxygen scavenger package obtained in each of Examples and Comparative Examples (oxygen scavenger package filled with the oxygen scavenger powder), and a moisture control agent obtained by mixing 8 g of water and 2 g of glycerin and impregnating diatomaceous earth with the mixture to support the mixture were put to prepare a sample for deoxidation time measurement. The sample was placed at 25°C, the oxygen concentration in the gas barrier bag was measured with a zirconia type oxygen concentration meter of a gas analyzer ("Check Mate 3" available from Mocon Dansensor), and a time at which the oxygen concentration reached 0.1% was defined as the deoxidation time. A shorter deoxidation time indicates a superior oxygen absorption performance.

### Measurement of Exothermic Temperature at Time of Opening (evaluation of heat generation suppression performance)

Using each of the oxygen scavenger packages obtained in Examples and Comparative Examples, a sample similar to the sample for deoxidation time measurement was prepared, and the sample was allowed to stand for one week. Thereafter, the gas barrier bag was opened to take out the oxygen scavenger package, which was allowed to stand on absorbent cotton with the air-permeable surface facing downward. A measurement terminal of a digital record thermometer ("TNA-140" available from ICHINEN TASCO CO., LTD.) was brought into contact with the non-air-permeable surface to measure the exothermic temperature for 30 minutes, and the maximum exothermic temperature was recorded. A lower maximum exothermic temperature indicates a superior heat generation suppression performance.

### [Table 1]

**Table 1**

| | Hardly water-soluble alkaline agent, etc. | | | Evaluation | |
|---|---|---|---|---|---|
| | Type | Solubility (g) in 100 g of water | pH | Deoxidation time (hours) | Exothermic temperature (°C) |
| Example 1 | Magnesium oxide (heavy food additive) | 0.0086 | 10.8 | 15.8 | 28.1 |
| Example 2 | Electrofused magnesium oxide | 0.0086 | 11.3 | 11.9 | 38.3 |
| Example 3 | Magnesium hydroxide | 0.00035 | 9.8 | 15.8 | 38.5 |
| Comparative Example 1 | - | - | - | 9.8 | 69.4 |
| Comparative Example 2 | Calcium hydroxide | 0.17 | 12.7 | 27.4 | 25.1 |

From the results in Table 1, it can be seen that the oxygen scavenger powders of Examples have a high oxygen absorption performance while suppressing heat generation when a product is opened.

### Industrial Applicability

The oxygen scavenger powder according to the present invention causes the oxygen scavenger to generate less heat when a container enclosing its stored object and the oxygen scavenger is opened, and is excellent in oxygen absorption performance. Therefore, it can be applied to an oxygen scavenger containing iron as its main agent, and is particularly suitable for a moisture-dependent oxygen scavenger.

## Claims

1. An oxygen scavenger powder comprising an iron powder, a metal halide, and an alkaline agent, wherein the alkaline agent has a solubility of less than 0.1 g in 100 g of water at 25°C, and an aqueous dispersion of the alkaline agent has a pH of from 8 to 12 at 25°C.

2. The oxygen scavenger powder according to claim 1, further comprising activated carbon.

3. The oxygen scavenger powder according to claim 1 or 2, wherein a content of the alkaline agent is from 0.1 to 20 parts by mass with respect to 100 parts by mass of the iron powder.

4. The oxygen scavenger powder according to claim 2 or 3, wherein a content of the activated carbon is from 0.01 to 5 parts by mass with respect to 100 parts by mass of the iron powder.

5. The oxygen scavenger powder according to any one of claims 1 to 4, wherein the aqueous dispersion of the alkaline agent has a pH of from 9.5 to 11.5 at 25°C.

6. The oxygen scavenger powder according to any one of claims 1 to 5, wherein the alkaline agent is at least one selected from the group consisting of magnesium oxide, magnesium hydroxide, basic magnesium carbonate, barium sulfate, and trimagnesium phosphate.

7. The oxygen scavenger powder according to claim 6, wherein the magnesium oxide is at least one selected from the group consisting of heavy burned magnesium oxide and electrofused magnesium oxide.

8. The oxygen scavenger powder according to any one of claims 1 to 7, wherein the metal halide is at least one selected from the group consisting of an alkali metal chloride, an alkali metal bromide, an alkaline earth metal chloride, and an alkaline earth metal bromide.

9. The oxygen scavenger powder according to any one of claims 1 to 8, wherein a content of the metal halide is from 0.01 to 5 parts by mass with respect to 100 parts by mass of the iron powder.

10. The oxygen scavenger powder according to any one of claims 1 to 9, wherein the alkaline agent is a particle, and an average particle diameter of the particle is from 3 to 50 µm.

11. An oxygen scavenger package comprising the oxygen scavenger powder described in any one of claims 1 to 10 and an air-permeable packaging material containing the oxygen scavenger powder.
